# EUROPEAN PATENT SPECIFICATION

(11) **EP 0 845 643 B1**
(45) Date of publication and mention of the grant of the patent: **09.02.2005**
(21) Application number: 97202071.3
(22) Date of filing: 04.07.1997
(51) Int. Cl.: F25D 11/02, F25D 17/06, F25D 21/06

(54) **A refrigeration system with variable forced ventilation**
Kühlanlage mit veränderlicher Zwangsbelüftung
Système de refroidissement à ventilation forcée variable

(30) Priority: 27.11.1996 IT MI962475
(43) Date of publication of application: 03.06.1998
(60) Divisional application: 04026527.4
(73) Proprietor: CANDY S.p.A., I-20052 Monza (Milano) (IT)
(72) Inventor: Fumagalli, Silvano, 20052 Monza - Milano (IT)
(74) Representative: Siniscalco, Fabio

(56) References cited:
- EP-A- 0 541 172
- US-A- 3 103 797
- US-A- 3 759 051
- US-A- 5 255 530
- US-A- 5 269 152
- PATENT ABSTRACTS OF JAPAN vol. 016, no. 474 (M-1319), 2 October 1992 (1992-10-02) & JP 04 169768 A (SHARP CORP), 17 June 1992 (1992-06-17)
- PATENT ABSTRACTS OF JAPAN vol. 016, no. 507 (M-1327), 20 October 1992 (1992-10-20) & JP 04 187970 A (MATSUSHITA REFRIG CO LTD), 6 July 1992 (1992-07-06)

## Description

The invention relates to a method for operating refrigeration system according to the preamble of claim 1 and a refrigeration system according to the preamble of claim 7. Such a refrigeration system is known from US 3 759 051.

Before going any further, by way of introduction to this description and to the appended claims, the term refrigerating system is intended to indicate in general herein the possible applications of the refrigeration units mentioned above which are intended for maintaining temperature conditions varying from a few degrees above 0°C (about 5°C) down to -18°C and even lower.

In practice, these applications relate mainly to normal domestic refrigerators and freezers with one or more compartments, to refrigerated product-display counters and windows, to chambers of various shapes and sizes for the storage or movement of perishable goods (for example, for preserving meats, fish, fruit, etc. and their transportation in refrigerated containers or vans) even in deep-frozen form, etc.; however, the use of the above-mentioned refrigeration systems in the cryogenics field, that is, in a context in which temperatures much lower than those used in the more common applications just listed, should not be excluded.

In the refrigeration systems in question, it is known to use suitable means for generating a forced circulation of air inside the cooled compartment.

The forced circulation of air may in fact be used to prevent the formation of temperature gradients in the cooled compartment, thus rendering the temperature more uniform or, in the case of systems having defrosting systems, such as so-called "no-frost" refrigerators, the forced ventilation is used to melt the ice formed on the evaporator. Some examples of "no-frost" refrigerators are given in Italian patent applications Nos. MI91A002984 and MI91A002985, in the name of the Applicant of the present application.

It should, however, be pointed out that both of these applications describe refrigerators having two compartments communicating with one another by means of at least one duct through which the air moved by a fan is passed; in these refrigerators, the forced air-circulation serves for cooling the two compartments as well as for the aforementioned defrosting.

As stated above, the refrigeration systems considered herein also have thermostatic regulation systems, that is, systems which can maintain a certain temperature inside the cooled compartment with variations of the general operating conditions of the system; these conditions may be the temperature selected by the user of the compartment, the temperature of the atmosphere outside the system, the number and duration of openings and closures of the cooled compartment in order to remove or add to its contents, the heat capacity of whatever is preserved in the aforementioned compartment, and hence the quantity of heat to be removed, that is, as is also said by experts in the art, the frigories to be produced, as well as any other variables which affect the operation of the system.

When the means for detecting an operating parameter of the refrigeration system, usually the temperature of the cooled compartment, indicate a value higher than the preselected value, the regulation system activates the compressor of the refrigeration unit and the ventilation means in order to bring the temperature in the cooled compartment back to the desired value.

In practice, therefore, the regulation carried out is of the ON/OFF (connected/disconnected) type, and thus operates with little flexibility even though, in order to make the regulation system more complete, sensors are sometimes provided for detecting the temperature of the evaporator, as shown in application MI91A002984 already cited.

With regard to the defrosting cycle in "no frost" refrigerators, this is usually carried out when the compressor is disconnected so as to enable the ventilation means to bathe the evaporator with air at a temperature such as to melt the ice formed thereon; the duration of the defrosting cycle can be controlled by a timer or on the basis of a certain temperature being reached in the cooled compartment (in this connection see the two patent applications mentioned above).

Naturally, it is hardly necessary to state that the regulation system has suitable electronic apparatus of known type for coordinating the operation of the various parts of the system and achieving the regulation mentioned.

However, it has been found in refrigeration systems of the prior art that, in practice, regulation does not always take place in an optimal manner.

In fact, the number of frigories necessary to re-establish the desired temperature is sometimes quite high, so as to require the compressor to operate for a prolonged period with excessive energy consumption; this is the case, for example, when a large mass to be cooled, perhaps having a fairly high temperature in comparison with the -18°C usually used in freezers, is put in the refrigeration compartment, or when there are high temperatures outside the refrigeration system, as may occur during the warmer seasons of the year.

In other situations, moreover, the forced air-circulation in the cooled compartment may be obstructed by the bodies of the products present inside the compartment, so that the loss of pressure produced in the circulating air-flow slows its speed, consequently reducing the exchange of heat between the air and the evaporator of the refrigeration unit, as well as between the air and the mass to be cooled.

If these conditions of obstruction of the forced air-circulation occur, when the regulation system of the system is reestablishing the temperature provided for in the cooled compartment, this operation may take longer than necessary owing to the lower heat-exchange rate achieved; this also therefore leads to more prolonged operation of the compressor than normal, which again corresponds to a greater consumption of electrical energy.

Moreover, it should be pointed out that, if these operating overloads go on for long, they may lead to wear of the compressor and may thus require its replacement or at least necessitate major maintenance.

Although these problems could be overcome by an over-sized compressor, a solution of this type would involve an increase in consumption and in the production costs of the refrigeration systems which it would be convenient to avoid.

The object of the present invention is to solve the problems set out above in relation to the refrigeration systems of the prior art; this object is achieved by a system of the type indicated at the beginning of the description, the characteristics of which are set out in the appended claims.

For a better understanding of the invention as a whole with its characteristics and the advantages resulting therefrom, a description relating to two refrigeration systems is given below by way of nonlimiting example, with reference to the appended drawings, in which:
Figure 1 is a schematic, longitudinally-sectioned side view of a refrigerator not forming part of the invention,
Figure 2 is a view similar to that of Figure 1 of a refrigerator according to the invention,
Figure 3 is a view of the refrigerator shown in Figure 2, sectioned on the line III-III thereof, with a portion removed.

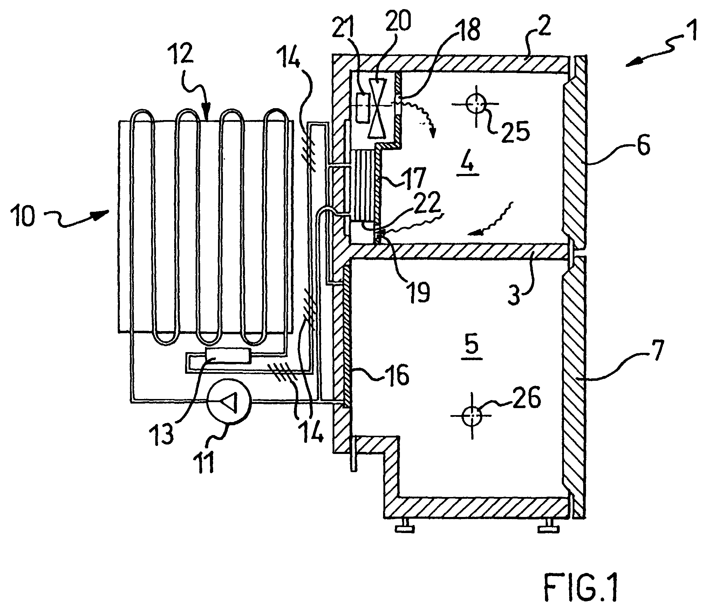

With reference to Figure 1, this shows a refrigerator for domestic use, generally indicated 1; this refrigerator comprises a cabinet 2 with insulated walls, in which a dividing wall 3 defines two compartments 4 and 5, of which the first is a freezer compartment and is therefore kept at a lower temperature than the second compartment 5 which is suitable for preserving foods. The compartments 4 and 5 have respective closure doors 6 and 7.

In the refrigerator 1, there is a refrigeration unit 10 including a compressor 11, a condenser 12 in the form of a coil, a filter 13, some expansion valves 14 for the refrigerant fluid circulating in the unit, a first evaporator 15 exchanging heat with the freezer compartment 4, and a second evaporator 16 exchanging heat with the second compartment 5. More precisely, the first evaporator 15 is in a double rear wall of the freezer compartment 4 defined by a wall 17 in which there are openings 18 and 19, the function of which will become clearer from the following description, the second evaporator 16 being incorporated in the rear wall of the second compartment 5.

The freezer compartment 4 also contains ventilation means 20 for generating a forced circulation of air inside the compartment, the means being constituted, in this embodiment, by a fan driven by a brushless, direct-current motor 21 having continuously-adjustable operating characteristics. An electrical resistor 22 is associated with the first evaporator 22 for defrosting it, in known manner.

Each compartment 4 or 5 of the refrigerator also contains temperature-detection means 25 and 26 constituted by normal thermistors.

The refrigerator of the invention has a regulation system to which the compressor 11 of the refrigeration unit and the motor 21 of the ventilation means 20 are subservient, and to which the thermistors 25 and 26 for detecting the temperature in the compartments 4 and 5 are connected; this regulation system also comprises an electronic control unit which is of known type and will not therefore be described in detail herein, and which is suitable for coordinating the operation of the various parts of the refrigeration system of the invention, as will be explained below.

In particular, the following description will relate to the operation of the refrigerator with reference solely to the freezer compartment 4 in which the ventilation means 20 are disposed, the second compartment 5 operating in the conventional manner for refrigerators for preserving foods at temperatures above 0°C without the use of forced ventilation.

It is necessary simply to point out that the refrigeration unit 10 has a switching valve, disposed downstream of the expansion valves 14 and not shown in the drawings, for diverting the flow of refrigerant fluid towards one or other of the evaporators 15 and 16 upon command by the regulation system.

When the thermistor 25 detects a temperature greater than that desired for the freezer compartment 4, this temperature being selectable by the user by means of the regulation system which has selection means such as knobs or the like for this purpose, the control unit switches on the compressor 11 and the ventilation means 20. In particular, in this refrigeration system, the initial speed of rotation of the motor 21 of the fan 20 upon which the initial flow-rate of air circulating in the compartment 4 depends is arranged so as to correspond to a predetermined value stored in the regulation system and determined in dependence on the dimensions of the compartment and of the refrigeration unit at the design stage.

As a result of the starting of the compressor and of the fan, a forced circulation of air is established in the compartment 4 from the opening 18 towards the opening 19, as indicated by the arrows in Figure 1 whilst, at the same time, the temperature inside the compartment 4 decreases progressively with a series of values identifying a curve of temperature against time. These values are detected by the thermistor 25 and transmitted to the control unit of the regulation system which compares them with a reference curve stored therein.

If the actual reduction in temperature in the compartment 4 takes place more slowly than is provided for by the reference curve, the control unit of the regulation system increases the speed of rotation of the motor 21 of the fan, thus increasing the forced circulation in the compartment 4 and consequently the exchange of heat between the air and the mass to be cooled contained in the compartment, as well as between the air and the evaporator 15; in this situation, the speed of rotation of the fan motor 21 is also changed by the regulation system on the basis of a respective program also stored in the control unit.

The speed of rotation of the fan calculated by the control unit on the basis of the aforementioned program is then maintained for a certain period of time the duration of which may either be predetermined, that is, constant, for example, with a fixed value of 1.2 or more minutes, stored in the control unit, or variable, that is, calculated by the aforesaid regulation program.

When, as a result of the change in the speed of rotation of the fan, the reduction in the temperature as a function of time returns to the values provided for by the reference curve, the compressor and the fan can be kept in operation until the desired temperature is re-established in the freezer compartment 4; after this reestablishment, both the compressor and the fan are switched off by the regulation system.

With regard to the operation of the device for defrosting the freezer compartment 4, this is activated when the compressor is not in operation or, in any case, when fluid is not circulating in the evaporator 15 because it is directed towards the other evaporator 16 by the switching valve. In these conditions, the regulation system thus causes electrical current to pass through the resistor associated with the evaporator, and also switches on the fan 20; the air circulates in the compartment 4 from the opening 18 to the opening 19 as explained above and thus bathes, in succession, the electrical resistor 22, so as to be heated, and then the evaporator 15 with the ice formed thereon, thawing the ice. A temperature change also takes place in the compartment 4 in this case, but in the opposite direction to that described above; that is, the average temperature in the compartment will be raised from the -18°C envisaged for its normal operation to a value determined essentially by the thermal balance between the heat exchanged by the air with the electrical resistor and that exchanged with the ice on the evaporator. The forgoing description of the defrosting method doesn't form part of the invention.

The temperature rise is detected once more by the thermistor 25 and is indicated to the central control unit of the regulation system which compares it with a second reference curve suitably stored; if the curve of the temperature over time differs from the second reference curve, for example, because the forced circulation of air in the compartment 4 is impeded by pressure losses due to the presence of bodies which are bulky or are arranged in a disorderly manner, or for any other reason, the regulation system can correct this difference by increasing the speed of rotation of the motor 21 of the fan 20; this re-establishes in the compartment heat-exchange conditions for the air circulating in the compartment such as to permit a temperature-change in the compartment conforming to the second reference curve mentioned.

For greater safety, however, the duration of the defrosting cycle is in any case preferably limited to a predetermined period of time between a lower value and an upper value, stored in the control unit.

The variation of the flow-rate and the speed of the air in forced circulation therein, favours the heat exchanges which it undergoes in the compartment 4 to be cooled; it is thus possible to reduce the times necessary for reestablishing the desired temperature conditions in the compartment in comparison with a conventional system having ON/OFF regulation as in the prior art, naturally if other conditions remain the same.

In other words, the system of the invention enables the number of frigories exchanged inside the compartment cooled in a certain period of time to be varied so that the periods for which the compressor is switched on can be reduced; this result is achieved by variation of the flow-rate and of the speed of the air brought about by an increase in the speed of rotation of the motor 21 which drives the fan.

Moreover, with a suitable selection of the motor, the increase in energy consumption necessary for its regulation is less than the saving in consumption resulting from the reduction in the operating periods of the compressor, which is thus advantageous in overcoming the problems referred to with reference to the prior art.

It should also be pointed out that the refrigeration system of the invention is particularly adaptable, since it can cope autonomously with situations in which there is a considerable requirement for frigories, such as situations which occur as a result of continual opening of the cooled compartment, or when the mass to be cooled or, more correctly, its heat capacity, is large or, finally when the forced air-circulation in the compartment is obstructed in some way; in fact, in these situations, the regulation system reacts by increasing the rate of revolution of the motor which drives the fan so as to re-establish a cooling rate conforming to the reference rate in the compartment.

The situation referred to is in fact that in which the cooled compartment is opened frequently during a certain period of time; as soon as the regulation system of the refrigerator switches on the compressor and the ventilation means in accordance with the operating system described above, the temperature in the compartment tends to decrease; however, since the door of the compartment is opened frequently during the regulation stage, clearly the temperature therein will decrease more slowly than normally or may not decrease at all; in such circumstances, the regulation system increases the fan speed so as to increase the cooling capacity of the system and compensate for the unusual operating situation.

Considerations similar to those just set out also apply when bodies with large heat capacities, that is, bodies for which the product of their specific heat by their mass is large, are put in the compartment. For example, it is possible to consider a situation in which a piece of meat of a certain size is put into a normal domestic freezer at ambient temperature. In fact, after the temperature in the compartment rises from the normal -18°C as a result of the presence of these bodies, the regulation system switches on the compressor and starts the fan at the initial speed as described above; the presence of bodies with large heat capacities, however, causes a slower reduction in the temperature over time (or, if it is preferred, cooling rate) inside the cooled compartment than the first reference curve already mentioned which generally relates to average operating conditions of the refrigeration system.

In these circumstances, the regulation system therefore increases the forced air-circulation in accordance with the teaching already described so as to bring the temperature reduction in the compartment back within the predetermined limits.

Finally, it will also be understood that, when the flow of air circulating in the compartment is obstructed and thus slowed down, for example, for the reasons explained above, if the regulation system switches on the compressor and starts the fan at the predetermined initial speed, the temperature will decrease more slowly over time than if the forced air-circulation were not obstructed, other conditions remaining the same. In this eventuality, the regulation system can also detect the operating anomaly of the refrigeration system and can bring the situation back within the reference parameters by increasing the speed of rotation of the fan.

In summary, therefore, the system of the invention is self-regulating even if it has to operate in unusual situations.

With reference to the first cooling curve stored in the control unit, it can be determined experimentally at the stage of the design of the system by means of operating tests in predetermined conditions; it can therefore be understood that this curve will vary from one system to another and it need hardly be pointed out that it is possible to store, in one control unit, several reference curves corresponding to respective operating conditions of the system, for example, relating to minimum, average, and maximum operating conditions. Naturally, the considerations just expressed may also be applied to the second reference curve relating to the defrosting cycle.

With regard to the operation of the motor, on the other hand, it is appropriate to stress that, for the system of the invention, motors without sliding contacts, such as brushless, direct-current motors of the type used in the preceding embodiment or alternating-current induction motors are to be preferred; the latter should preferably have operating characteristics adjustable continuously by control of the supply frequency.

The preference for these motors is due both to reasons of a strictly electro-technical nature and, in particular, to the fact that, since they have to operate in environments in which there is a certain humidity, motors having sliding electrical contacts do not ensure adequate reliability and suitability from the point of view of health and hygiene. In this connection, it is in fact important to bear in mind that the sliding electrical contacts mentioned inevitably produce odours connected with the friction which distinguishes them and may possibly release dust particles which might circulate in the cooled compartment, contaminating its contents, as a result of the forced ventilation.

The use of variable forced air-circulation in accordance with the teaching of the invention is also particularly advantageous owing to the uniform manner in which the defrosting cycle of an evaporator is carried out.

In fact, as stated above, by virtue of the variation of the forced air-circulation it is possible to regulate the heat exchanged thereby with the ice formed on the evaporator; if this regulation capability were not provided, the quantity of ice melted during a predetermined time might be less than that desired, owing to insufficient ventilation caused, for example, by the presence of obstructions in the compartment which slow the flow of air in circulation. The above-mentioned regulation eliminates this risk with considerable benefits with regard to the effectiveness of the defrosting carried out.

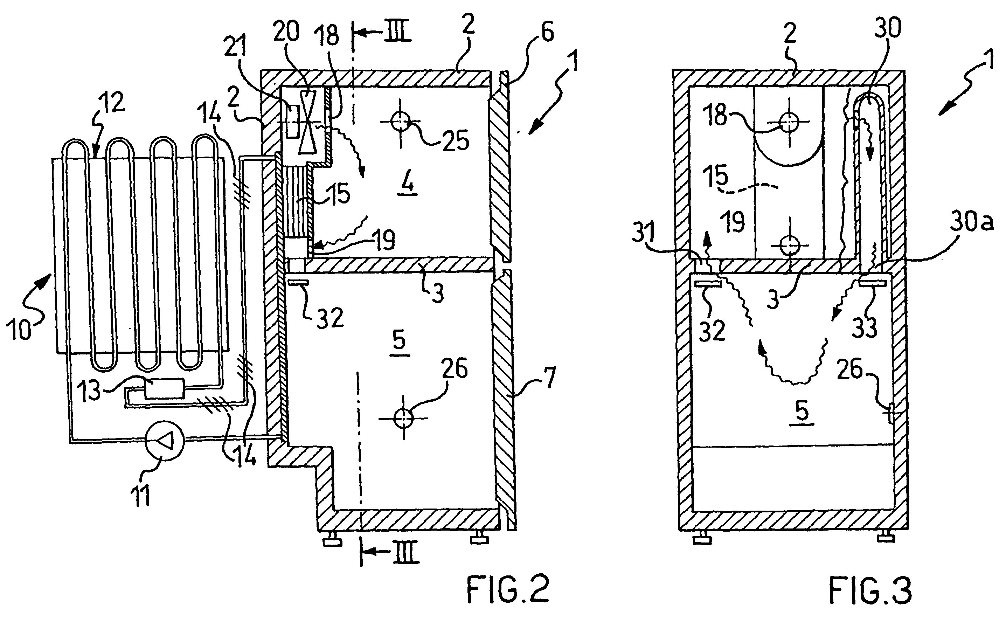

The embodiment of a refrigerating system with two separated compartments, as above described with reference to figure 1, does not form part of theinvention but is useful for understanding the features of the invention described below with reference to the embodiment of the refrigeration system of the invention shown in Figures 2 and 3, in which the parts of a refrigerator according to the invention which are structurally or functionally equivalent to those already described are indicated by the same reference numerals.

This embodiment of the invention differs from the first refrigeration system essentially in that the compartment 4 which is at the lower temperature is in fluid communication with the second compartment 5 which is at the higher temperature; in practice, therefore, the latter is cooled by means of air coming from the freezer compartment 4 which is therefore at a temperature low enough to bring about the cooling of the second compartment 5.

For this purpose, in the double rear wall of the compartment 4 in which the fan 20 and the evaporator 15 are situated, there is a duct 30 having one end 30a extending through the dividing wall 3 and communicating with the second compartment 5; in the dividing wall 3 there is also an opening 31 which puts the compartments 4 and 5 into communication. At the end 30a of the duct and in the region of the opening 31, the dividing wall 3 has respective shutters 32 and 33, the opened or closed condition of which are controlled by the regulation system of the refrigerator.

The compartments 4 and 5 are cooled in a manner similar to that described above; it is necessary only to point out that, in this embodiment, since fluid communication between the two compartments 4 and 5 is possible, when the temperature of the latter, detected by the thermistor 26, is within a desired range of values, the shutters 32 and 33 are in the closed condition so as to isolate the compartments 4 and 5, cutting off the aforementioned fluid communication. On the other hand, when the thermistor 26 detects a rise in the temperature in the compartment 5, for example, as a result of the opening of its door 7, the shutters 32 and 33 will be in the open condition so as to allow the compartment 5 to be cooled, re-establishing the desired temperature therein.

In this embodiment, the variation in the temperature of the compartment 5 over time is also detected by the thermistor 26 and calculated by the control unit of the regulation system which compares the values detected with a corresponding reference curve stored therein in order to bring about any change in the speed of rotation of the fan 20 and hence in the forced circulation of air in the refrigerator.

With regard to the freezer compartment 4 and the regulation of its temperature, naturally the remarks made above with reference to the other embodiment apply; however, for the defrosting of the evaporator 15, which takes place when the compressor is switched off, this time, the heat necessary to melt the ice formed on the evaporator 15 is no longer provided by an electrical resistor but by the flow of air coming from the compartment 5 which, as stated above, is at temperatures above 0°C. For this purpose, as well as switching on the fan, the regulation system also opens the shutters 32 and 33 to allow air to recirculate from the compartment 5 to the evaporator, as indicated by the arrows in Figure 3, along a path which comprises, in succession, the duct 30, and the openings 31 and 19 in the dividing wall 3 and in the rear wall 17 of the freezer compartment 4, respectively.

In this embodiment, the change in temperature detected by the thermistor 25 and indicated to the control unit of the regulation system thus also permits a check as to whether the defrosting is taking place correctly in comparison with a corresponding reference curve; in fact, if this does not occur the regulation system changes the speed of rotation of the motor 21 of the fan 20; this variation brings about a change in the flow-rate and in the speed of the air coming from the compartment 5 as well as in the heat exchanged thereby with the ice on the evaporator so as to bring the defrosting operation back within the predetermined parameters.

In this embodiment, the duration of the defrosting cycle is also preferably timed.

Amongst the further important advantages achieved by the system of the invention, it should be stressed that its functional flexibility permits the development of simplified embodiments in comparison with the examples described.

In particular, it should be pointed out that the principle of the invention can be used in order to produce a programmable refrigeration system; in fact, it can easily be seen that, on the basis of the teaching provided by the invention, it would be possible to build a domestic freezer in which the rate of freezing of the foods could be selected by the user.

For example, a user might wish to freeze a certain quantity of meat, fish or other food; with the provision of a suitable regulation program on the control unit of the refrigeration system, it would be possible to arrange for a user to be able to set the time desired for the freezing of the aforementioned quantity of food.

The control unit would calculate automatically the necessary rate of rotation of the fan to bring about freezing within the time required by the user.

In other words, instead of having a self-regulating refrigeration system, in a variant of this type, it would be left to the user to select the weight and the type of product to be frozen, as well as the time required for the freezing; on the basis of this information, the regulation system could easily calculate the frigories to be produced within the period of time selected and, in parallel, the speed of rotation of the fan necessary to achieve this result.

It is hardly necessary to point out that an embodiment of the invention of this type could be formed either in combination with or as an alternative to that of the preceding embodiments in which autonomous regulation is envisaged.

Naturally, further variations and improvements of the invention with respect to that described up to now should not be excluded; the embodiment described above in fact relates to a refrigeration system which is somewhat simplified and limited in the number as well as the operation of their components in order to facilitate understanding of the principles on which the invention is based.

In addition, it is also clear that to improve the performance of a refrigeration system in accordance with the present invention, the use of several fans rather than the single one shown in the drawings should not be excluded and it is also possible to use sensors of various kinds for detecting the various operating parameters of the system of the invention in order to achieve even more precise control thereof: by way of indication, the possibility of using a larger number of temperature detectors than that used in the embodiments described above as well as that of using means for detecting the speed of circulation of the air at some points in the system, and so on, are not therefore considered to be excluded. Naturally it will be necessary to select, at the time in question, solutions which achieve a compromise between the level of performance required of the apparatus and the complexity of its regulation system which is connected with excessive proliferation of parameters to be kept under control.

Moreover, with regard to the control of the fan, other solutions should not be excluded but should satisfy the criteria and conditions set out above, which make brushless direct-current motors or alternating-current induction motors preferable.

## Claims

1. Method for operating a refrigeration system comprising:
- a compartment (4) cooled by a refrigeration unit (10) of the type including a condenser (12), a compressor (11) and an evaporator (15) exchanging heat with the compartment (4);
- ventilation means (20, 21) for generating a forced circulation of air inside the cooled compartment (4);
- means (25) for detecting the temperature in the cooled compartment (4);
- a regulation system suitable to maintain predetermined temperature conditions in the cooled compartment (4) and to which the compressor (11) and the ventilation means (20, 21) are subservient, the ventilation means (20, 21) bringing about a variation of the forced air circulation,
wherein the method comprises the step of defrosting the evaporator (15) whilst the compressor (11) of the refrigerating unit (10) is switched off, said defrosting step being **characterized by**
- putting the cooled compartment (4) into fluid communication with a second compartment (5) having a temperature above 0°C;
- bringing about a forced circulation of air between the cooled compartment (4) and the second compartment (5) having a temperature above 0°C;
- causing the evaporator (15) to be bathed by the air coming from the second compartment (5) which is kept at a temperature above 0°C.

2. Method according to claim 1, comprising the steps of detecting the change in temperature over time in the cooled compartment (4) and varying the forced circulation of air in dependence on the detected change in temperature over time.

3. Method according to any one of the preceding claims, comprising the step of varying the forced circulation of air according to a period of time selected by a user in order to cool a predetermined mass to a certain temperature.

4. Method according to any one of the preceding claims, comprising the steps of:
- starting the compressor (11) and a fan (21) for generating a forced circulation of air inside the cooled compartment (4) whilst, at the same time, the temperature inside the compartment (4) decreases progressively with a series of values identifying a curve of temperature against time,
- detecting these values by means of a thermistor (25) and transmitting them to a control unit of the regulation system, which compares them with a reference curve stored therein;
- if the reduction in temperature in the cooled compartment (4) takes place more slowly than is provided for by the reference curve, the speed of rotation of a motor (20) of the fan (21) is increased by the control unit, thus increasing the forced circulation of air.

5. Method according to any one of the preceding claims, comprising the steps of:
- putting the cooled compartment (4) into fluid communication with a second compartment (5) having a higher temperature and
- cooling the second compartment (5) with the air coming from the cooled compartment (4).

6. Method according to any one of the preceding claims, wherein the refrigeration system is a refrigerator for domestic use and the cooled compartment (4) is a freezer compartment.

7. Refrigeration system for implementing the method according to any one of the preceding claims, comprising:
- a compartment (4) cooled by a refrigeration unit (10) of the type including a condenser (12), a compressor (11) and an evaporator (15) exchanging heat with the compartment (4);
- ventilation means (20, 21) for generating a forced circulation of air inside the cooled compartment (4);
- means (25) for detecting the temperature in the cooled compartment (4);
- a regulation system suitable to maintain predetermined temperature conditions in the cooled compartment (4) and to which the compressor (11) and the ventilation means (20, 21) are subservient, the ventilation means (20, 21) bringing about a variation of the forced air circulation,
**characterized in that** the refrigeration system comprises means (30, 30a, 31, 32, 33) operable to put the cooled compartment (4) into fluid communication with a second compartment (5) having a temperature above 0°C and **in that** the ventilation means (20, 21) are operable to bring about a forced circulation of air between the cooled compartment (4) and the second compartment (5) having a temperature above 0°C for defrosting the evaporator (15) with the air coming from the second compartment (5).

8. Refrigeration system according to claim 7, wherein the forced circulation of air is variable in dependence on the change in temperature over time detected in the cooled compartment (4).

9. Refrigeration system according to claim 7 or 8, wherein the ventilation means comprise a fan (20) driven by a brushless, direct current electric motor (21) or an alternating-current induction motor.

10. Refrigeration system according to any one of claims 7 to 9, wherein the forced circulation of air is variable according to a period of time selected by a user in order to bring a predetermined mass to be cooled to a predetermined temperature.

11. Refrigeration system according to any one of claims 7 to 10, wherein:
- the compressor (11) and a fan (21) are provided for generating a forced circulation of air inside the cooled compartment (4) such that, at the same time, the temperature inside the compartment (4) decreases progressively with a series of temperature values identifying a curve of temperature against time and;
- a thermistor (25) is provided which detects these temperature values and transmits them to a control unit of said regulation system which compares them with a reference curve stored therein and, if the reduction in temperature in the cooled compartment (4) takes place more slowly than is provided for by the reference curve, increases the speed of rotation of a motor (20) of the fan (21), thus increasing the forced circulation of air.

12. Refrigeration system according to any one of claims 7 to 11, wherein the refrigeration system is a refrigerator for domestic use and the cooled compartment (4) is a freezer compartment.

## Patentansprüche

1. Verfahren zum Betreiben eines Kühlsystems, das umfasst:
ein Fach (4), das von einer Kühleinheit (10) des Typs gekühlt wird, der einen Verflüssiger (12), einen Kompressor (11) und einen Verdampfer (15) enthält, der in Wärmeaustausch mit dem Fach (4) steht;
eine Belüftungseinrichtung (20, 21), die eine Zwangszirkulation von Luft im Inneren des gekühlten Fachs (4) erzeugt;
eine Einrichtung (25), die die Temperatur in dem gekühlten Fach (4) erfasst;
ein Reguliersystem, das sich eignet, um vorgegebene Temperaturbedingungen in dem gekühlten Fach (4) aufrechtzuerhalten, und dem der Kompressor (11) sowie die Belüftungseinrichtung (20, 21) untergeordnet sind, wobei die Belüftungseinrichtung (20, 21) eine Änderung der Zwangs-Luftzirkulation bewirkt,
wobei das Verfahren den Schritt des Abtauens des Verdampfers (15), während der Kompressor (11) der Kühleinheit (11) abgeschaltet ist, umfasst, und der Abtauschritt **dadurch gekennzeichnet ist, dass**:
das gekühlte Fach (4) in Fluidverbindung mit einem zweiten Fach (5) gebracht wird, das eine Temperatur über 0°C hat;
eine Zwangszirkulation von Luft zwischen dem gekühlten Fach (4) und dem zweiten Fach (5) mit einer Temperatur über 0°C bewirkt wird;
der Verdampfer (15) von der Luft umströmt wird, die aus dem zweiten Fach (5) kommt, das auf einer Temperatur über 0°C gehalten wird.

2. Verfahren nach Anspruch 1, das die Schritte des Erfassens der Änderung der Temperatur in dem gekühlten Fach (4) im Verlauf der Zeit und des Ändems der Zwangszirkulation von Luft in Abhängigkeit von der erfassten Änderung der Temperatur im Verlauf der Zeit umfasst.

3. Verfahren nach einem der vorangehenden Ansprüche, das den Schritt des Ändems der Zwangszirkulation von Luft entsprechend einem Zeitraum umfasst, der von einem Benutzer ausgewählt wird, um eine vorgegebene Masse auf eine bestimmte Temperatur zu kühlen.

4. Verfahren nach einem der vorangehenden Ansprüche, das die folgenden Schritte umfasst:
Ingangsetzen des Kompressors (11) und eines Gebläses (21), um eine Zwangszirkulation von Luft im Inneren des gekühlten Fachs (4) zu erzeugen, wobei gleichzeitig die Temperatur im Inneren des Fachs (4) allmählich mit einer Reihe von Werten abnimmt, die eine Kurve der Temperatur als Funktion der Zeit darstellen,
Erfassen dieser Werte mittels eines Thermistors (25) und Übertragen derselben zu einer Steuereinheit des Reguliersystems, die sie mit einer darin gespeicherten Bezugskurve vergleicht;
wobei, wenn die Verringerung der Temperatur in dem gekühlten Fach (4) langsamer abläuft, als dies von der Bezugskurve vorgesehen ist, die Geschwindigkeit der Drehung eines Motors (20) des Gebläses (21) durch die Steuereinheit erhöht wird, um so die Zwangszirkulation von Luft zu verstärken.

5. Verfahren nach einem der vorangehenden Ansprüche, das die folgenden Schritte umfasst:
Herstellen von Fluidverbindung des gekühlten Fachs (4) mit einem zweiten Fach (5) mit einer höheren Temperatur, und
Kühlen des zweiten Fachs (5) mit der Luft, die aus dem gekühlten Fach (4) kommt.

6. Verfahren nach einem der vorangehenden Ansprüche, wobei das Kühlsystem ein Kühlschrank für den Haushaltsgebrauch ist und das gekühlte Fach (4) ein Gefrierfach ist.

7. Kühlsystem zum Umsetzen des Verfahrens nach einem der vorangehenden Ansprüche, das umfasst:
ein Fach (4), das durch eine Kühleinheit (10) des Typs gekühlt wird, der einen Verflüssiger (12), einen Kompressor (11) und einen Verdampfer (15) enthält, der in Wärmeaustausch mit dem Fach (4) steht;
eine Belüftungseinrichtung (20, 21), die eine Zwangszirkulation Luft im Inneren des gekühlten Fachs (4) erzeugt;
eine Einrichtung (25), die die Temperatur in dem gekühlten Fach (4) erfasst;
ein Reguliersystem, das sich eignet, um vorgegebene Temperaturbedingungen in dem gekühlten Fach (4) aufrechtzuerhalten, und dem der Kompressor (11) sowie die Belüftungseinrichtung (20, 21) untergeordnet sind, wobei die Belüftungseinrichtung (20, 21) eine Änderung der Zwangs-Luftzirkulation bewirkt,
**dadurch gekennzeichnet, dass** das Kühlsystem eine Einrichtung (30, 30a, 31, 32, 33) umfasst, die so betrieben werden kann, dass sie das gekühlte Fach (4) in Fluidverbindung mit einem zweiten Fach (5) bringt, das eine Temperatur über 0°C hat, und dass die Belüftungseinrichtung (20, 21) so betrieben werden kann, dass sie eine Zwangszirkulation von Luft zwischen dem gekühlten Fach (4) und dem zweiten Fach (5) mit einer Temperatur über 0°C bewirkt, um den Verdampfer (15) mit der Luft abzutauen, die aus dem zweiten Fach (5) kommt.

8. Kühlsystem nach Anspruch 7, wobei die Zwangszirkulation von Luft in Abhängigkeit von der Änderung der Temperatur im Verlauf der Zeit geändert werden kann, die in dem gekühlten Fach (4) erfasst wird.

9. Kühlsystem nach Anspruch 7 oder 8, wobei die Belüftungseinrichtung ein Gebläse (20) umfasst, das von einem bürstenlosen Gleichstrom-Elektromotor (21) oder einem Wechselstrom-Induktionsmotor angetrieben wird.

10. Kühlsystem nach einem der Ansprüche 7 bis 9, wobei die Zwangszirkulation von Luft entsprechend einem Zeitraum geändert werden kann, der von einem Benutzer ausgewählt wird, um eine vorgegebene Masse auf eine vorgegebene Temperatur zu kühlen.

11. Kühlsystem nach einem der Ansprüche 7 bis 10, wobei:
der Kompressor (11) und ein Gebläse (21) vorhanden sind, um eine Zwangszirkulation von Luft im Inneren des gekühlten Fachs (4) so zu erzeugen, dass gleichzeitig die Temperatur im Inneren des Fachs (4) allmählich mit einer Reihe von Temperaturwerten abnimmt, die eine Kurve der Temperatur als Funktion der Zeit darstellen und;
ein Thermistor (25) vorhanden ist, der diese Temperaturwerte erfasst und sie zu einer Steuereinheit des Reguliersystems überträgt, die sie mit einer darin gespeicherten Bezugskurve vergleicht, und, wenn die Verringerung der Temperatur in dem gekühlten Fach (4) langsamer abläuft, als dies von der Bezugskurve vorgesehen ist, die Geschwindigkeit der Drehung eines Motors (20) des Gebläses (21) erhöht und so die Zwangszirkulation von Luft verstärkt.

12. Kühlsystem nach einem der Ansprüche 7 bis 11, wobei das Kühlsystem ein Kühlschrank für den Haushaltsgebrauch ist und das gekühlte Fach (4) ein Gefrierfach ist.

## Revendications

1. Procédé de mise en oeuvre d'un système de réfrigération comprenant :
- un compartiment (4) refroidi par une unité de réfrigération (10) du type comprenant un condenseur (12), un compresseur (11) et un évaporateur (15) échangeant de la chaleur avec le compartiment (4) ;
- un moyen de ventilation (20, 21) destiné à générer une circulation forcée d'air à l'intérieur du compartiment refroidi (4) ;
- un moyen (25) destiné à détecter la température dans le compartiment refroidi (4) ;
- un système de régulation approprié pour maintenir des conditions de température prédéterminées dans le compartiment refroidi (4) et auquel le compresseur (11) et le moyen de ventilation (20, 21) sont asservis, le moyen de ventilation (20, 21) provoquant une variation de la circulation d'air forcée ;
dans lequel le procédé comprend l'étape de dégivrage de l'évaporateur (15) pendant que le compresseur (11) de l'unité de réfrigération (10) est désactivé, ladite étape de dégivrage étant **caractérisée par**
- la mise en communication de fluide du compartiment refroidi (4) avec un second compartiment (5) ayant une température au-dessus de 0 °C ;
- la production d'une circulation forcée d'air entre le compartiment refroidi (4) et le second compartiment (5) ayant une température au-dessus de 0 °C ;
- le fait d'amener l'évaporateur (15) à être immergé dans l'air provenant du second compartiment (5) qui est maintenu à une température au-dessus de 0 °C.

2. Procédé selon la revendication 1, comprenant les étapes consistant à détecter la variation de température au cours du temps dans le compartiment refroidi (4) et à faire varier la circulation forcée de l'air en fonction de la variation détectée de la température au cours du temps.

3. Procédé selon l'une quelconque des revendications précédentes, comprenant l'étape consistant à faire varier la circulation forcée de l'air conformément à un intervalle de temps sélectionné par un utilisateur de manière à refroidir une masse prédéterminée à une certaine température.

4. Procédé selon l'une quelconque des revendications précédentes, comprenant les étapes consistant à :
- démarrer le compresseur (11) et un ventilateur (21) pour générer une circulation forcée de l'air à l'intérieur du compartiment refroidi (4) alors que, en même temps, la température à l'intérieur du compartiment (4) diminue progressivement avec une série de valeurs représentant une courbe de température en fonction du temps ;
- détecter ces valeurs au moyen d'une thermistance (25) et les transmettre à une unité de commande du système de régulation, qui les compare à une courbe de référence enregistrée dans celle-ci ;
- si la réduction de température dans le compartiment refroidi (4) a lieu plus lentement que cela n'est prévu par la courbe de référence, la vitesse de rotation d'un moteur (20) du ventilateur (21) est augmentée par l'unité de commande, en augmentant ainsi la circulation forcée de l'air.

5. Procédé selon l'une quelconque des revendications précédentes, comprenant les étapes consistant à :
- mettre le compartiment refroidi (4) en communication de fluide avec un second compartiment (5) ayant une température supérieure et
- refroidir le second compartiment (5) avec l'air provenant du compartiment refroidi (4).

6. Procédé selon l'une quelconque des revendications précédentes, dans lequel le système de réfrigération est un réfrigérateur à usage domestique et le compartiment refroidi (4) est un compartiment congélateur.

7. Système de réfrigération destiné à exécuter le procédé selon l'une quelconque des revendications précédentes, comprenant :
- un compartiment (4) refroidi par une unité de réfrigération (10) du type comprenant un condenseur (12), un compresseur (11) et un évaporateur (15) échangeant de la chaleur avec le compartiment (4) ;
- un moyen de ventilation (20, 21) destiné à générer une circulation forcée de l'air à l'intérieur du compartiment refroidi (4) ;
- un moyen (25) destiné à détecter la température dans le compartiment refroidi (4) ;
- un système de régulation approprié pour maintenir des conditions de température prédéterminées dans le compartiment refroidi (4) et auquel le compresseur (11) et le moyen de ventilation (20, 21) sont asservis, le moyen de ventilation (20, 21) provoquant une variation de la circulation forcée de l'air ;
**caractérisé en ce que** le système de réfrigération comprend un moyen (30, 30a, 31, 32, 33) utilisable pour mettre le compartiment refroidi (4) en communication de fluide avec un second compartiment (5) ayant une température au-dessus de 0 °C, et **en ce que** le moyen de ventilation (20, 21) peut être actionné pour créer une circulation forcée de l'air entre le compartiment refroidi (4) et le second compartiment (5) ayant une température au-dessus de 0° C, afin de dégivrer l'évaporateur (15) avec l'air provenant du second compartiment (5).

8. Système de réfrigération selon la revendication 7, dans lequel la circulation forcée de l'air peut varier en fonction de la variation de température au cours du temps détectée dans le compartiment refroidi (4).

9. Système de réfrigération selon la revendication 7 ou 8, dans lequel le moyen de ventilation est constitué d'un ventilateur (20) entraîné par un moteur électrique à courant continu sans collecteur (21) ou un moteur à induction à courant alternatif.

10. Système de réfrigération selon l'une quelconque des revendications 7 à 9, dans lequel la circulation forcée de l'air varie en fonction d'un intervalle de temps sélectionné par un utilisateur de manière à amener une masse prédéterminée à être refroidie à une température prédéterminée.

11. Système de réfrigération selon l'une quelconque des revendications 7 à 10, dans lequel :
- le compresseur (11) et un ventilateur (21) sont prévus pour générer une circulation forcée de l'air à l'intérieur du compartiment refroidi (4) de sorte que, en même temps, la température à l'intérieur du compartiment (4) diminue progressivement avec une série de valeurs de température représentant une courbe de température en fonction du temps ; et
- une thermistance (25) est prévue, laquelle détecte ces valeurs de température et les transmet à une unité de commande dudit système de régulation qui les compare à une courbe de référence mémorisée dans celle-ci et, si la réduction de température dans le compartiment refroidi (4) a lieu plus lentement que cela n'est prévu par la courbe de référence, augmente la vitesse de rotation d'un moteur électrique (20) du ventilateur (21), en augmentant ainsi la circulation forcée de l'air.

12. Système de réfrigération selon l'une quelconque des revendications 7 à 11, dans lequel le système de réfrigération est un réfrigérateur à usage domestique et le compartiment refroidi (4) est un compartiment congélateur.
